# EUROPÄISCHE PATENTSCHRIFT

(11) **EP 1 813 730 B1**
(45) Veröffentlichungstag und Bekanntmachung des Hinweises auf die Patenterteilung: **11.01.2012**
(21) Anmeldenummer: 07000970.9
(22) Anmeldetag: 18.01.2007
(51) Int. Cl.: E02F 9/22, E02F 3/627, E02F 3/36, E02F 3/43, E02F 9/16, F15B 1/02, B62D 33/06

(54) **Frontlader und Traktorkabine für einen Traktor**
Front loader and tractor cabin
Chargeur frontal et cabine pour tracteur

(30) Priorität: 25.01.2006 DE 102006003768
(43) Veröffentlichungstag der Anmeldung: 01.08.2007
(73) Patentinhaber: Wilhelm Stoll Maschinenfabrik GmbH, 38268 Lengede/Broistedt (DE)
(72) Erfinder: Strüning, Stefan, 34545 Edertal-Bergheim (DE); Ockert, Uwe, 38268 Lengede (DE)
(74) Vertreter: Rehberg Hüppe + Partner

(56) Entgegenhaltungen:
- EP-A- 0 211 091
- EP-A- 1 239 087
- EP-A1- 1 365 074
- WO-A1-2004/071929
- DE-A1- 2 928 278
- DE-B- 1 273 435
- DE-B- 1 294 895
- DE-U1- 9 210 208
- FR-A1- 2 596 378
- JP-A- 1 014 437
- JP-A- 11 036 375
- US-A- 2 789 711
- US-A- 5 362 118
- US-A- 5 829 337

## Beschreibung

### TECHNISCHES GEBIET DER ERFINDUNG

Die Erfindung bezieht sich auf einen Frontlader für einen Traktor mit den Merkmalen des Oberbegriffs des unabhängigen Patentanspruchs 1.

### STAND DER TECHNIK

Zur Dämpfung von Schwingungen der Schwinge eines Frontladers ist es bekannt, die Hydraulikleitung, die beim Anheben der Schwinge mit dem Schwingenzylinder mit Druck beaufschlagt wird, mit einem gasgefüllten Druckspeicher zu verbinden. Das Gas in dem Druckspeicher bildet eine Gasfeder aus, die über die Hydraulikleitung die Schwinge mit starker Dämpfung elastisch abstützt. Im Betrieb eines Frontladers treten stark unterschiedliche Lasten auf die Schwinge und damit Drücke in der Hydraulikleitung zu dem Schwingenzylinder auf. Ein für einen bestimmten Druck ausgelegter Druckspeicher ist über diese unterschiedlichen Lasten für eine Schwingungsdämpfung der Schwinge des Frontladers nur bedingt geeignet. Wenn der Druck, für den der Druckspeicher ausgelegt ist, viel größer ist als die kleinen in der Hydraulikleitung auftretenden Drücke, ist der Druckspeicher als Dämpfung bei diesen kleinen Drücken unwirksam. Wenn der Druckspeicher hingegen für einen kleineren Druck ausgelegt ist, wird er bei den in der Hydraulikleitung ebenfalls auftretenden größeren Drücken unwirksam und überlastet, was zu seiner Beschädigung oder gar Zerstörung führen kann.

Aus der DE-A-1294895 ist ein Gleiskettenfahrzeug mit einem zwischen den Gleisketten angeordneten Schürfkübel bekannt. Der Schürfkübei ist mittels zwei hydraulischer Zylinder um eine horizontale Querachse schwenkbar, wobei die Hydraulik die Merkmale des Oberbegriffs des unabhängigen Patentanspruchs 1 aufweist. Dabei ist der höhere Druck in dem einen Druckspeicher auf das Gewicht des gefüllten Schürfkübels und der niedrige Druck In dem anderen Druckspeicher auf das Gewicht des leeren Schürfkübels abgestimmt.

Aus der JP-A-11036375 ist eine Baumaschine mit einem Frontlader bekannt, der eine um eine horizontale Schwingenschwenkachse anhebbare Schwinge und mindestens einen Schwingenzylinder zum Anheben der Schwinge aufweist, wobei ein schaltbares Dämpfungszuscheitventil vorgesehen ist, das eine zu dem Schwingenzylinder führende Hydraullkleitung, die zum Anheben der Schwinge mit einem Druck zu beaufschlagen ist, in einer Dämpfungszuschaltstellung mit einem gasgefüllten Druckspeicher verbindet. Dabei verbindet das Dämpfungszuschaltventil in seiner Dämpfungszuschaltstellung die Hydraulikleitung neben dem einen Druckspeicher, der sich auf einem höheren Druck befindet, bis zu einem Maximaldruck in der Hydraulikleitung auch mit einem anderen gasgefüllten Druckspelcher, der sich auf einem niedrigen Druck befindet. Auch hier sind die Drücke in den beiden Druckspeichern auf eine gefüllte Schaufel an dem Frontlader einerseits und eine leere Schaufel an dem Frontlader andererseits abgestimmt.

### AUFGABE DER ERFINDUNG

Es ist die Aufgabe der vorliegenden Erfindung, einen Frontlader mit einer über einen größeren Lastbereich als bisher wirksamen Dämpfung für die Schwinge des Frontladers aufzuzeigen.

### LÖSUNG

Die Aufgabe der Erfindung wird durch einen Frontlader mit den Merkmalen des unabhängigen Patentanspruchs 1 gelöst.

Bevorzugte Ausführungsformen des neuen Frontladers sind in den abhängigen Patentansprüchen definiert.

### BESCHREIBUNG DER ERFINDUNG

Bei dem neuen Frontlader mit den Merkmalen des unabhängigen Patentanspruchs 1 verbindet das Dämpfungszuschaltventil in seiner Dämpfungzuschaltstellung die Hydraulikleitung neben dem ersten Druckspeicher, der sich auf einem höheren Druck befindet, bis zu einem Maximaldruck in der Hydraulikleitung auch mit einem zweiten gasgefüllten Druckspeicher, der sich auf einem niedrigeren Druck befindet. D. h., die Dämpfung der Schwinge des neuen Frontladers ist zweistufig. Bei niedrigeren Lasten verbindet das Dämpfungszuschaltventil in seiner Dämpfungszuschaltstellung die Hydraulikleitung zu dem Schwingenzylinder mit beiden gasgefüllten Druckspeichern, von denen aufgrund seines leichteren Ansprechens im Wesentlichen derjenige auf niedrigerem Druck schwingungsdämpfend aktiv ist. Der Druckspeicher auf höherem Druck ist für die Dämpfung der Schwinge unter höherer Last vorgesehen, die mit einem Druck verbunden ist, die den Druckspeicher auf niedrigerem Druck bereits überlasten würde. Daher wird der Druckspeicher auf niedrigerem Druck beim Überschreiten des Maximaldrucks in der Hydraulikleitung von der Hydraulikleitung abgehängt. Insgesamt steht durch beide Druckspeicher ein extrem vergrößerter Lastbereich zur Verfügung, über den eine effektive Dämpfung der Schwingung erfolgt.

Der Maximaldruck, ab dem der zweite Druckspeicher auf dem niedrigeren Druck von der Hydraulikleitung abgehängt wird, wird durch ein Druckregelventil zwischen dem Dämpfungszuschaltventil und dem zweiten Druckspeicher vorgegeben . Für den vereinfachten Rücklauf von Hydraulikmedium von dem zweiten Druckspeicher auf niedrigerem Druck kann dem Druckregelventil ein von dem zweiten Druckspeicher zu dem Dämpfungszuschaltventil öffnendes Rückschlagventil parallel geschaltet sein.

Indem zwischen den zweiten Druckspeicher auf dem niedrigeren Druck und das Druckregelventil ein Wechselventil geschaltet ist, dessen anderer Zweig bei in seiner Dämpfungszuschaltstellung befindlichem Dämpfungszuschaltventil mit einer zweiten Hydraulikleitung verbunden ist, die auf eine andere Seite des Schwingenzylinders führt als die erste Hydraulikleitung, kann der zweite Druckspeicher auf dem niedrigeren Druck auch Druckstöße in der zweiten Hydraulikleitung dämpfen. Die Druckstöße in dieser zweiten Hydraulikleitung, der Senkenleitung zu dem Schwingenzylinder, liegen typischerweise auf einem niedrigeren Druckniveau als die in der ersten Hydraulikleitung, der Hebenleitung des Schwingenzylinders, auftretenden. Deshalb ist eine Verbindung der Senkenleitung mit dem zweiten Druckspeicher auf niedrigerem Druck ausreichend, um über den gesamten Arbeitsbereich der Schwinge eine Dämpfung bereitzustellen.

Eine gute Abstimmung ist dann gegeben, wenn der Druck in dem ersten Druckspeicher auf höherem Drucknämlich 30 bis 100 %, vorzugsweise 50 bis 70 %, höher ist als der Druck in dem zweiten Druckspeicher auf niedrigerem Druck. Beispielsweise kann der erste Druckspeicher auf höherem Druck für 30 bar ausgelegt sein, während der zweite Druckspeicher auf niedrigerem Druck für 18 bar ausgelegt ist.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft . Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

### KURZBESCHREIBUNG DER FIGUREN

Im Folgenden wird die Erfindung anhand eines in der Figur dargestellters bevorzugters Ausführungsbeispiels weiter erläutert und beschrieben.

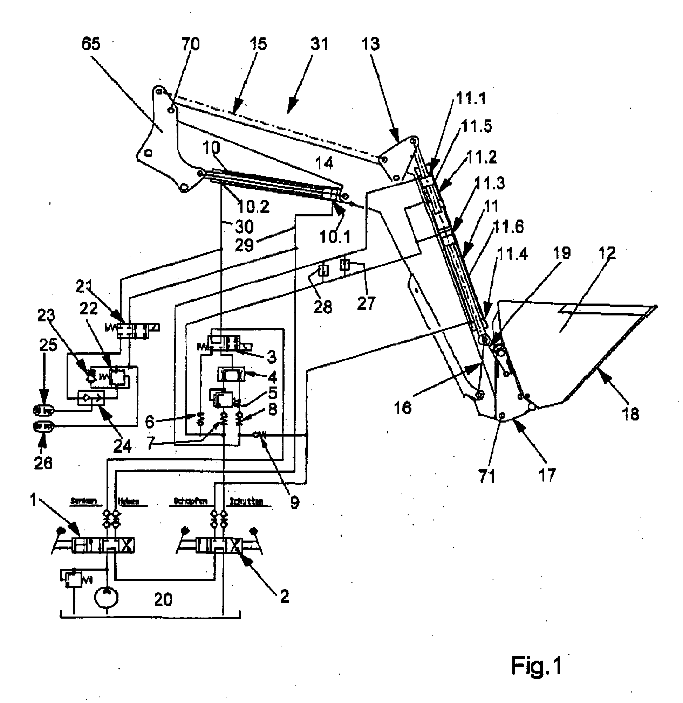

- **Fig. 1**: zeigt einen Frontlader in einer schematischen Seitenansicht mit der zugehörigen Hydraulik gemäß der vorliegenden Erfindung.

### FIGURENBESCHREIBUNG

Der in **Fig. 1** dargestellt Frontlader 31 weist eine Einfahrsäule 65 auf, über die der Frontlader 31 an einen hier nicht dargestellten Traktor anbaubar ist. An der Einfahrsäule 65 ist eine Schwinge 14 des Frontladers 31 um eine horizontale Schwingenachse 70 verschwenkbar gelagert. Zum Verschwenken der Schwinge 14 ist ein Schwingenzylinder 10 an die Einfahrsäule 65 und die Schwinge 14 angelenkt. Um die Schwinge um ihre Schwingenachse 70 herum anzuheben, wird mit einem Ventil 1 eine Kolbenseite 10.1 des Schwingenzylinders 10 über eine Hydraulikleitung 29 mit Hydraulikmedium beaufschlagt, während zum Absenken der Schwinge 14 um die Schwingenachse 70 eine Kolbenseite 10.2 des Schwingenzylinders 10 über eine Hydraulikleitung 30 von dem Ventil 1 aus mit Hydraulikmedium beaufschlagt wird. Vorne an die Schwinge 14 ist ein Wechselrahmen 17, der ein Werkzeug 12 mit einer Aufstandfläche 18 trägt, um eine Werkzeugschwenkachse 71 verschwenkbar gelagert. Zum Verschwenken des Wechselrahmens 17 mit dem Werkzeug 12, bei dem es sich hier um eine Ladeschaufel handelt, ist ein Werkzeugzylinder 11 vorgesehen, der über eine Viergelenkanordnung mit einem Doppelhebel 19 und einem Umlenkhebel 16 an dem Wechselrahmen 17 angreift und sich an seinem anderen Ende an einem Umlenkdreieck 13 abstützt, welches gegenüber der Schwinge 14 verschwenkbar ist und von einer Führungsstange 15 gehalten wird, die sich ihrerseits an der Einfahrsäule 65 abstützt. Die Führungsstange 15, das Umlenkdreieck 13, der als Parallelogrammlenker dienende Werkzeugzylinder 11 und die Viergelenkanordnung mit dem Doppelhebel 19 und dem Umlenkhebel 16 bilden eine mechanische Parallelführung für das Werkzeug 12 in seiner aktuellen Schwenkstellung um die Werkzeugschwenkachse 71 beim Anheben der Schwinge 14 mit dem Schwingenzylinder 10. Durch Betätigen des Parallelführungsabschaltventils 3 in seine hier nicht dargestellte Parallelführungsabschaltstellung wird diese mechanische Parallelführung beim Anheben der Schwinge 14 mit dem Schwingenzylinder 10 gezielt übergangen, um ein Nachschöpfen des Werkzeugs 12 beim Anheben der Schwinge 14 zu erreichen. Wenn sich das Parallelführungsabschaltventil 3 in seiner Parallelführungsabschaltstellung befindet, fließt durch Betätigen des Ventils 1 zum Heben der Schwinge 14 Hydraulikmedium über die Hydraulikleitung 29 auf die Kolbenseite 10.1 des Schwingenzylinders 10. Der Schwingenzylinder 10 wird ausgefahren. Das dabei auf seiner Kolbenseite 10.2 in die Hydraulikleitung 29 verdrängte Hydraulikmedium gelangt durch das betätigte Parallelführungsabschaltventil 3 nicht komplett zurück durch das Ventil 1 zu der Hydraulikmediumversorgungseinrichtung 20, sondern zum Teil auch auf eine Kolbenseite 11.1 eines Gleichlaufzylinders 11.5, der zusammen mit einem in Reihe geschalteten Differentialzylinder 11.6 den Werkzeugzylinder 11 ausbildet. Die Beaufschlagung der Kolbenseite 11.1 des Gleichlaufzylinders 11.5 führt mit dem Anheben der Schwinge 14 über den Schwingenzylinder 10 zu einem Hochschwenken des Werkzeugs 12 um die Werkzeugschwenkachse 71, wodurch das gewünschte Nachschöpfen des Werkzeugs 12 realisiert ist. Konkret wird das Hydraulikmedium, das in die Hydraulikleitung 29 verdrängt wird, hinter dem Parallelführungsabschaltventil 3 durch einen Stromteiler 4 und ein nachgeschaltetes Druckregelventil aufgeteilt. Ein Teil des Hydraulikmediums gelangt über die Rückschlagventile 7 und 6 und durch das Parallelführungsabschaltventil 3 sowie das Ventil 1 zurück zu der Hydraulikmediumversorgungseinrichtung 20. Der andere Teil wird über ein Rückschlagventil 8 der Kolbenseite 11.1 des Gleichlaufzylinders 11.5 zugeführt. Wenn sich in der Folge der Gleichlaufzylinder 11.5 bis zu seinem Anschlag bewegt hat, kann weiteres Hydraulikmedium von dem Rückschlagventil 8 durch das Rückschlagventil 9 auf die Kolbenseite 11.4 des Differentialzylinders 11.6 gelangen, um die Nachschöpfbewegung des Werkzeugs 12 fortzusetzen. Das sowohl auf der Kolbenseite 11.2 des Gleichlaufzylinders 11.5 als auch der Kolbenseite 11.3 des Differentialzylinders 11.6 verdrängte Hydraulikmedium gelangt über das Rückschlagventil 6 und durch das Parallelführungsabschaltventil 3 sowie das Ventil 1 zurück zu der Hydraulikmediumversorgungseinrichtung 20. Der Stromteiler 4 in Verbindung mit dem Druckregelventil 5 ist notwendig, um die Abstimmung zwischen dem typischerweise größer ausgelegten Schwingenzylinder 10 mit dem Werkzeugzylinder 11 herbeizuführen. Wenn der Gleichlaufzylinder 11.5 bereits von seinen Ringflächen auf die Ringfläche des Schwingenzylinders 10 abgestimmt ist, können der Stromteiler 4 und das Druckregelventil 5 entfallen. Wenn bei in seiner Parallelführungsabschaltstellung befindlichem Parallelführungsabschaltventil 3 das Ventil 1 auf Senken betätigt wird, blockiert das Rückschlagventil 6 den Strom des von dem Ventil 1 kommenden Hydraulikmediums. Zum Senken der Schwinge 14 muss zunächst das Ventil 3 in seine hier in Fig. 1 wiedergegebene Stellung deaktiviert werden, so dass das Ventil 1 zum Senken der Schwinge 14 direkt die Hydraulikleitung 30 zu der Kolbenseite 10.2 des Schwingenzylinders 10 beaufschlagen kann. Die Rückschlagventile 7 und 8 verhindern ein Austauschen des Hydraulikmediums zwischen den Kolbenseiten 11 und 14 des Gleichlaufzylinders 11.5 und des Differentialzylinders 11.6 einerseits und den Kolbenseiten 11.2 und 11.3 des Gleichlaufzylinders 11.5 und des Differentialzylinders 11.6 andererseits. Das Rückschlagventil 9 lässt nur einen Austausch von Hydraulikmedium von der Kolbenseite 11.1 des Gleichlaufzylinders 11.5 in Richtung zu der Kolbenseite 11.4 des Differentialzylinders 11.6 zu, d. h. das Hydraulikmedium kann von der Kolbenseite 11.1 nur beim Schütten auf die Kolbenseite 11.4 fließen. Der umgekehrte Weg ist nicht möglich, da sonst bei Betätigung eines Ventils 2 zum Schöpfen auch der Gleichlaufzylinder 11.5 angesteuert würde. Zur Abstimmung der auf die Kolbenseite 11.1 umgeleitete Menge an Hydraulikmedium könnte auch ein Schleppzylinder dem Schwingenzylinder 10 parallel geschaltet sein, der in Abstimmung auf den Gleichlaufzylinder 11.5 dimensioniert ist. Auch in diesem Fall könnte auf den Stromteiler 4 und das Druckregelventil 5 verzichtet werden. Der Werkzeugzylinder 11 muss kein doppelter Zylinder sein, wie hier dargestellt ist. Die Nachschöpffunktion kann auch bei einem einfachen Differentialzylinder als Werkzeugzylinder 11 realisiert werden. Der Werkzeugzylinder kann alternativ auch ein doppelter Differentialzylinder mit zwei Ringflächen- und einer gemeinsamen Kolbenflächenkammer sein. Die Verwendung eines doppelten Zylinders als Werkzeugzylinder hat Vorteil, dass man dadurch über das Ventil 2 nur den für das eigentliche Schöpfen aber nicht den für das Nachschöpfen vorgesehenen Teil des Werkzeugzylinders 11 ansteuern kann. Dadurch wird vermieden, dass durch das Ventil 2 das Werkzeug 12 bei angehobener Schwinge 14 "überschöpft" wird. Ein solches Überschöpfen hätte zur Folge, dass beim anschließenden Senken der Schwinge Verspannung zwischen der mechanischen Parallelführung und der Schwinge 14 auftreten können, die durch mechanische Anschläge hervorgerufen werden. Ideal ist die Ausbildung des Werkzeugzylinders 11 durch die dargestellte Kombination eines Differentialzylinders mit einem Gleichlaufzylinder. Hierbei dient der Differentialzylinder als Hauptzylinder zum Verschwenken des Werkzeugs und der Gleichlaufzylinder als Hilfszylinder für das Nachschöpfen. Bei dem Gleichlaufzylinder 11.5 ist auf einfache Weise eine Absicherung gegen Überlast realisierbar, wie sie in Fig. 1 angedeutet ist. Über zwei in entgegen gesetzten Orientierungen angeordnete Druckbegrenzungsventile 27 und 28 kann beim Überschreiten von Druck auf einer der Kolbenseiten 11.1 und 11.2 Hydraulikmedium auf die andere Kolbenseite übertreten. Fig. 1 zeigt nur einen Schwingenzylinder 10 und einen Werkzeugzylinder 11. Der vollständige Frontlader 31 umfasst zwei Schwingenzylinder 10 und zwei Werkzeugzylinder 11. Er benötigt aber nur ein Parallelführungsabschaltventil 3, wenn das Hydraulikmedium von den Kolbenseiten 11.2 beider Schwingenzylinder 10 zusammengeführt und nach dem Stromteiler 4 wieder auf die beiden Gleichlaufzylinder 11.5 der Werkzeugzylinder 11 aufgeteilt wird.

Fig. 1 stellt weiterhin eine Dämpfung für die Schwinge 14 dar. Über ein Dämpfungszuschaltventil 21, das hier in seiner nicht betätigten Stellung wiedergegeben ist, ist die zu der Kolbenseite 10.2 des Schwingungszylinders 10 führende Hydraulikleitung 29 mit einem Druckspeicher 26 verbindbar, der für die Dämpfung der Schwinge 14 ausgelegt ist, wenn die Schwinge stark belastet ist, so dass ein hoher Druck in der Hydraulikleitung 29 ansteht. Um auch bei niedrigeren Drücken in der Hydraulikleitung 29 eine wirksame Dämpfung bereitstellen zu können, verbindet das Dämpfungszuschaltventil 21 in seiner Dämpfungszuschaltstellung die Hydraulikleitung 29 über ein Druckregelventil 22 bis zu einem an dem Druckregelventil 22 eingestellten Maximaldruck auch mit einem Druckspeicher 25, der sich auf einem niedrigeren Druckniveau befindet, d.h. auf einen niedrigeren Druck vorgespannt ist, als der Druckspeicher 26. So sind bis zu dem Maximaldruck über das Dämpfungszuschaltventil 21 beide Druckspeicher 25 und 26 mit der Hydraulikleitung 29 verbunden, wobei bei diesen niedrigeren Drücken im Wesentlichen der Druckspeicher 25 für die Dämpfung der Schwinge 14 wirksam ist. Der Rücklauf von Hydraulikmedium von dem Druckspeicher 25 in die Hydraulikleitung 29 kann unter Umgehung des Druckregelventils 22 beschleunigt durch ein dem Druckregelventil 22 parallel geschaltetes Rückschlagventil 23 erfolgen. So steht beim Zurückfedern der Schwinge 14 nach oben das Hydraulikmedium des niedriger vorgespannten Druckspeichers 25 über das Rückschlagventil 23 sofort zur Verfügung. Mittels eines Wechselventils 24 dient der Druckspeicher 25 auch zum Abfangen von Druckspitzen in der mit der anderen Kolbenseite 10.1 des Schwingenzylinders 10 verbundenen Hydraulikleitung 30. Hier treten jedoch keine so großen Druckspitzen auf, dass ein zusätzlicher Anschluss der Hydraulikleitung 30 auch an den Druckspeicher 26 mit der höheren Druckvorspannung erforderlich wäre.

### BEZUGSZEICHENLISTE

- 1: Ventil
- 2: Ventil

- 3: Parallelführungsabschaltventil
- 4: Stromteiler
- 5: Druckregelventil
- 6: Rückschlagventil

- 7: Rückschlagventil
- 8: Rückschlagventil
- 9: Rückschlagventil
- 10: Schwingenzylinder
- 10.1: Kolbenseite (Kolbenfläche)
- 10.2: Kolbenseite (Ringfläche)
- 11: Werkzeugzylinder
- 11.1: Kolbenseite (Ringfläche)
- 11.2: Kolbenseite (Ringfläche)
- 11.3: Kolbenseite (Kolbenfläche)
- 11.4: Kolbenseite (Ringfläche)
- 11.5: Gleichlaufzylinder
- 11.6: Differentialzylinder
- 12: Werkzeug
- 13: Umlenkdreieck
- 14: Schwinge
- 15: Steuerstange
- 16: Umlenkhebel
- 17: Wechselrahmen
- 18: Aufstandfläche
- 19: Doppelhebel
- 20: Hydraulikmediumversorgungseinrichtung

- 21: Dämpfungszuschaltventil
- 22: Druckregelventil
- 23: Rückschlagventil
- 24: Wechselventil

- 25: Druckspeicher

- 26: Druckspeicher
- 27: Druckbegrenzungsventil
- 28: Druckbegrenzungsventil
- 29: Hydraulikleitung
- 30: Hydraulikleitung

- 65: Einfahrsäule
- 70: Schwingenschwenkachse
- 71: Werkzeugschwenkachse

## Patentansprüche

1. Frontlader für einen Traktor mit einer um eine horizontale Schwingenschwenkschse (70) anhebbaren Schwinge (14) und mit mindestens einem Schwigenzylinder (10) zum Anheben der Schwinger (14) wobei ein schaltbares Dämpfungszuschaltventil (21) vorgesehen ist, das in einer Dämpfungsmschaltsellung eine zu dem Schwingenzylinder(10) führende erste Hydraulikleitung (32) die zum Anheben der Schwinge (14) mit einem Druck zu beaufschlagen ist, mit einem ersten gasgefüllten Druckspeicher (26) verbindet, wobei das Dämpfungszuschaltventil (21) in seiner Dämpfungszuschaltsteltung die erste Hydraulikleitung (29) neben dem ersten gasgefüllten Druckspeicher (26), dar sich auf einem höheren Druck befindet, bis zu einem Maximaldruck in der ersten Hydraulikleitung (29) auch mit einem zweiten gasgefüllten Druckspeicher (25) verbindet, der sich auf einem niedrigeren Druck befindet, und wobei der Maximaldruck an einem Druckregelventil (22) zwischen dem Dämpfungszuschaitventil (21) und dem zweiten gasgefüllten Druck speicher (25) eingestellt ist, **dadurch gekennzeichnet, dass** zwischen den zweiten gasgefüllten Druckspeicher (25) und das Druckregelventil (22) ein Wechselventil (24) geschaltet ist, dessen anderer Zweig bei In seiner Dämpfungszuschaltstellung befindlichem Dämpfungs- zuschaltventil (21) mit einer zweiten Hydraulikteltung (30) verbunden ist, die auf eine andere Kolbenseite (10.2) des Schwingenzylinders (10) führt als die erste Hydraulikleitung (29).

2. Frontlader nach Anspruch, 1, **dadurch gekennzeichnet, dass** dem Druckregelventil (22) ein von dem zweiten gasgefüllten Druckspeicher (25) zu dem Dämpfungszuschattventil (21) hin öffnendes Rückschtagventil (23) parallel geschaltet ist.

3. Frontlader nach einem der Ansprüche 1 und 2 **dadurch gekennzeichnet, dass** der Druck in dem ersten gasgefüllten Druckspeicher (26) 30 bis 100% höher ist als in dem zweiten gasgefüllten Druckspeicher (25).

4. Frontlader nach Anspruch 3, **dadurch gekennzeichnet, dass** der Druck indem ersten gasgefüllten Druckspeicher (26) 50 bis 70% höher ist als in dem zweiten gasgefüllten Druckspeicher (25).

## Claims

1. Front loader for a tractor comprising a linkage arm (14) which can be raised about a horizontal linkage swivel axis (70) and at least one linkage cylinder (10) for raising the linkage arm (14), wherein a switchable damping switch-on valve (21) is provided which, in a damping switched-on position, connects a first hydraulic line (26), which leads to the linkage cylinder (10) and which is to be loaded with a pressure for raising the linkage arm (14), to a first gas-filled pressure storage (26), wherein the damping switch-on valve (21), in its damping switched-on position, connects the first hydraulic line (29), up to a maximum pressure in the first hydraulic line (29), besides the first gas-filled pressure storage (26) which is at a higher pressure, also to a second gas-filled pressure storage (25) which is at a lower pressure, and wherein the maximum pressure is adjusted at a pressure control valve (22) between the damping switch-on valve (21) and the second gas-filled pressure storage (25), **characterized in that** a two-way valve (24) is connected between the second gas-filled pressure storage (25) and the pressure control valve (22), the other branch of which is connected to a second hydraulic line (30) which leads to another piston side (10.2) of the linkage cylinder (10) than the first hydraulic line (29), when the damping switch-on valve (21) is in its damping switched-on position.

2. Front loader according to claim 1, **characterized in that** a check valve (23) opening from the second gas-filled pressure storage (25) towards the damping switch-on valve (21) is connected in parallel to the pressure control valve (22).

3. Front loader according to any of the claims 1 and 2, **characterized in that** the pressure in the first gas-filled pressure storage (26) is by 30 to 100 % higher than in the second gas-filled pressure storage (25).

4. Front loader according to claim 3, **characterized in that** the pressure in the first gas-filled pressure storage (26) is by 50 to 70 % higher than in the second gas-filled pressure storage (25).

## Revendications

1. Chargeur frontal pour un tracteur, comportant un bras oscillant (14) pouvant être relevé autour d'un axe de pivotement (70) horizontal, et comportant au moins un cylindre de balancement (10) pour relever le bras oscillant (14), une soupape d'enclenchement d'un amortissement (21) commutable étant prévue, laquelle, dans une position d'enclenchement de l'amortissement, relie une première conduite hydraulique (29), menant vers le vérin de balancement (10) et destinée à être sollicitée par une pression pour relever le bras oscillant (14), avec un premier accumulateur de pression (26) rempli de gaz, la soupape d'enclenchement d'un amortissement (21), dans sa position d'enclenchement de l'amortissement, reliant la première conduite hydraulique (29), parallèlement au premier accumulateur de pression (26) rempli de gaz et soumis à une pression plus élevée, jusqu'à une pression maximale dans la première conduite hydraulique (29), également à un deuxième accumulateur de pression (25) rempli de gaz et soumis à une plus faible pression, et la pression maximale étant réglée au niveau d'une soupape régulatrice de pression (22) entre la soupape d'enclenchement d'un amortissement (21) et le deuxième accumulateur de pression (25) rempli de gaz, **caractérisé en ce qu'**entre le deuxième accumulateur de pression (25) rempli de gaz et la soupape régulatrice de pression (22) est monté un sélecteur de circuit (24), dont l'autre embranchement est relié, lorsque la soupape d'enclenchement d'un amortissement (21) est dans sa position d'enclenchement de l'amortissement, à une deuxième conduite hydraulique (30), qui mène vers un côté (10.2) du piston du vérin de balancement (10) différent de celui vers lequel mène la première conduite hydraulique (29).

2. Chargeur frontal selon la revendication 1, **caractérisé en ce qu'**un clapet anti-retour (23), ouvrant depuis le deuxième accumulateur de pression (25) rempli de gaz vers la soupape d'enclenchement d'un amortissement (21), est monté en parallèle avec la soupape régulatrice de pression (22).

3. Chargeur frontal selon les revendications 1 et 2, **caractérisé en ce que** la pression dans le premier accumulateur de pression (26) rempli de gaz est de 30 à 100 % supérieure à celle dans le deuxième accumulateur de pression (25) rempli de gaz.

4. Chargeur frontal selon la revendication 3, **caractérisé en ce que** la pression dans le premier accumulateur de pression (26) rempli de gaz est de 50 à 70 % supérieure à celle dans le deuxième accumulateur de pression (25) rempli de gaz.
